# EUROPEAN PATENT APPLICATION

(11) **EP 2 387 117 A2**
(43) Date of publication of application: **16.11.2011**
(21) Application number: 11162972.1
(22) Date of filing: 19.04.2011
(51) Int. Cl.: H01S 3/08, H01S 3/0941, H01S 3/106, H01S 3/11

(54) **Solid-state laser device**

(30) Priority: 11.05.2010 JP 2010109335
(71) Applicant: Fujifilm Corporation, Minato-ku Tokyo (JP)
(72) Inventor: Yamazoe, Shogo, Kanagawa (JP)
(74) Representative: HOFFMANN EITLE

(57) **Abstract**

There is provided a solid-state laser device (10) including: a resonator; a solid-state laser medium (18) disposed in the resonator; an excitation section that irradiates an excitation beam into the solid-state laser medium (18); a mode selector (26) that controls transverse modes of oscillating light in the resonator; and a movement section (28) that moves the mode selector (26) along the resonator optical axis direction (Z).
The laser may be mode-locked with a SESAM (12) and the laser medium may be Yb: KYW. The transverse mode selector may be a knife edge (26) which is translated with the help of a holder (28) resulting in a single transverse mode emission of the laser.

## Description

### BACKGROUND

### Technical Field

The present invention relates to a solid-state laser device.

### Related Art

The beam quality of laser light emitted from a solid-state laser device (this means here the quality of transverse modes) greatly affects the performance in applications employing such a laser device.

When a laser beam of deteriorated quality (that has become a multi-mode beam) is focused, the size of the focused beam spot becomes larger than when a laser beam of an ideal TEM₀₀ mode (single-mode) is focused, resulting in a reduction in light density in the focused beam spot. This accordingly leads to a reduction in processing precision and processing speed in laser processing applications, and leads to a reduction in image resolution in image capture applications, such as in laser microscopes and the like.

Problems in laser performance other than with beam quality also arise for a laser device outputting a laser beam that has become a multi-mode beam. For example, in a mode-locked solid-state laser, a phenomenon is recognized in which, due to the effects of a multi-mode beam, pulse light is generated with a different cycle to that of the repeat cycle of the pulse light determine by the resonator length. See, for example, non-patent document "Pulse-resolved measurements of subharmonic oscillations in a Kerr-lens mode-locked Ti: sapphire laser" J. Opt. Soc. Am. B, Vol6, 339-344 (1999).

Such pulse light is not desirable in various applications of pulse light due to variation present in the intensity between pulse beams.

Furthermore, as described in Japanese Patent Application Laid-Open (JP-A) No. 2-170585, generally, in order to eliminate multi-modes, a mode selector is installed in the resonator, such as an aperture, slit, knife edge or the like, to impart loss to any multi-mode beams and suppress oscillation. With such mode selectors, adjustment is performed to the aperture size, slit width or knife edge position in a direction perpendicular to the resonator optical axis.

However, when a mode selector is inserted into a multi-mode beam, deep in towards the center of the beam, loss is imparted even to the single-mode, leading to a reduction in oscillation efficiency. There is accordingly a requirement for high precision regulation of a mode selector in order to impart loss only to the multi-mode beam.

### SUMMARY

The present invention is made in order to address the above issue, and provides a solid-state laser device enabling transverse modes of an emitted laser beam to be regulated with good precision.

In order to address the above issue, a first aspect of the present invention provides a solid-state laser device including:
a resonator;
a solid-state laser medium disposed in the resonator;
an excitation section that irradiates an excitation beam into the solid-state laser medium;
a mode selector that controls transverse modes of oscillating light in the resonator; and
a movement section that moves the mode selector along the resonator optical axis direction.

According to this aspect of the present invention, due to configuration with the movement section for moving the mode selector for controlling transverse modes of oscillating light in the resonator along the resonator optical axis direction, the transverse modes of the emitted laser beam can be regulated with good precision.

A second aspect of the present invention provides the solid-state laser device of the first aspect, wherein the resonator comprises a semiconductor saturable absorber mirror, and a negative dispersion mirror that controls group velocity dispersion within the resonator.

A third aspect of the present invention provides the solid-state laser device of the second aspect, wherein the position of the mode selector is adjusted to a position in which noise with frequencies differing from that corresponding to inverse of light pulse circulating time in the resonator is suppressed and a mode-locked state is maintained.

A fourth aspect of the present invention provides the solid-state laser device of the first aspect, wherein a focused light spot, at focal point in the solid-state laser medium, of the excitation light from the excitation section has an elliptical shape, and the mode selector blocks light in the long axis direction of the elliptical shape of the excitation light.

A fifth aspect of the present invention provides the solid-state laser device of the first aspect, wherein the mode selector is a knife edge, a slit, or an aperture.

The present invention exhibits the effect of enabling transverse modes of emitted laser beam to be regulated with good precision.

### BRIEF DESCRIPTION OF THE DRAWINGS

Exemplary embodiments of the present invention will be described in detail based on the following figures, wherein:
Fig. 1A is a plan view of a solid-state laser device;
Fig. 1B is a side view of Fig. 1A;
Fig. 1C is a diagram of a mirror holder as viewed from the arrow B direction of Fig. 1B;
Fig. 2 is an explanatory diagram regarding control of transverse modes using a knife edge;
Fig. 3 is a diagram showing a profile of a beam spot of a laser beam in a conventional solid-state laser device;
Fig. 4 is a graph showing a frequency spectrum of a laser beam in a conventional solid-state laser device;
Fig. 5 is a graph showing a profile of a beam spot of a laser beam in a solid-state laser device according to the present invention; and
Fig. 6 is a graph showing a frequency spectrum of a laser beam in a solid-state laser device according to the present invention.

### DETAILED DESCRIPTION

Explanation now follows regarding an exemplary embodiment of the present invention, with reference to the drawings.

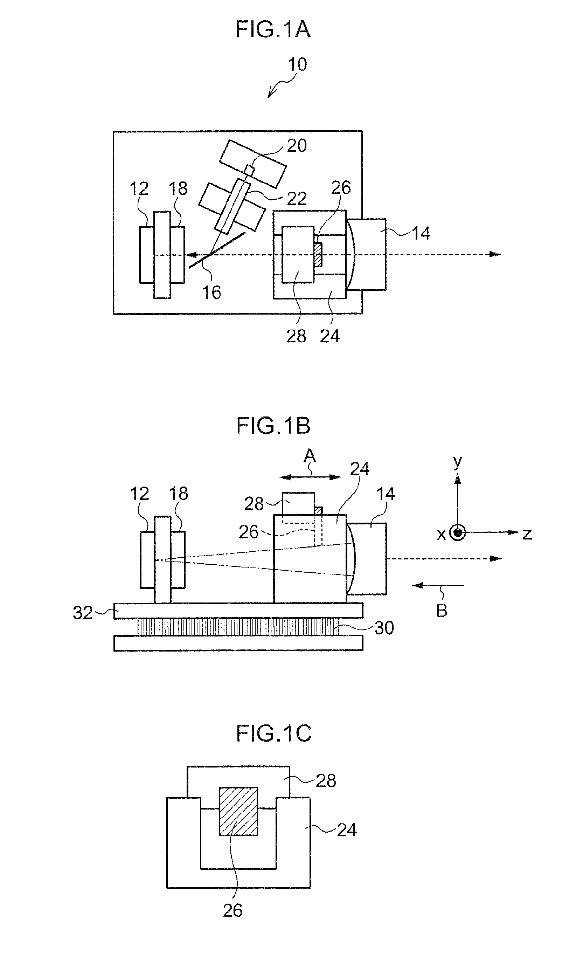

Fig. 1A is a plan view and Fig. 1B is a side view showing an outline configuration of a solid-state laser device 10 according to the present exemplary embodiment. As shown in Fig. 1A and Fig. 1B, the solid-state laser device 10 is a mode locked laser device of hemispherical resonator construction, configured by a SESAM 12 and an output mirror 14 at the two ends of the resonator.

A dichroic mirror 16 and a solid-state laser medium 18 are disposed within the resonator.

An excitation light optical system for exciting the solid-state laser medium 18 is configured including a semiconductor laser 20 and a SEFLOC lens 22 (serving as an excitation section).

As an example, a laser having an oscillation wavelength of 980nm, emission beam width of 50 µm, and maximum output of 2.5 W can be employed as the semiconductor laser 20.

As an example, a lens treated with an anti-reflection coating to give reflectivity of 2% or less to light of wavelength 980 ± 5 nm may be employed as the SEFLOC(graded index lens) lens 22.

The laser beam emitted from the semiconductor laser 20, namely the excitation light, is focused by the SEFLOC lens 22, and reflected by the dichroic mirror 16 towards the solid-state laser medium 18.

The dichroic mirror 16 has a reflectivity of 95% or greater to light of 980 ± 5nm wavelength, and is treated with a dichroic coating to give a reflectivity of 0.2% or less to light of 1045 ± 10 mn wavelength.

The solid-state laser medium 18 disposed in the resonator is, for example, a solid-state laser crystal doped with Ytterbium (Yb), with a specific example thereof being Yb: KYW or the like. The solid-state laser medium 18 can, for example, be a medium having a Yb concentration of 5% and a thickness of 1.5 mm, with both end faces onto which the oscillating light is incident treated with an anti-reflection coating to give a reflectivity of 0.2% or less to light of 1045 ± 10nm.

The SESAM 12 configuring one end of the resonator is a semiconductor saturable absorber mirror device, and for example a device having a modulation depth (ΔR) 0.5%, a saturation fluence (Fₛₐₜ, s) of 120 µ J/cm² may be employed as the SESAM 12. The SESAM 12 may, for example, be disposed at about 50mm from the output mirror 14.

The output mirror 14 configuring the other end of the resonator functions to correct group velocity divergence within the resonator and has a certain amount of transmissivity to oscillating light, and is, for example, a concave mirror with a radius of curvature of 50mm.

Anti-reflection coating treatment is performed to the flat plane side of the output mirror 14 to give a reflectivity of 0.2% or less to light of 1045 ± 10nm wavelength. The concave face side of the output mirror 14 is treated with a high reflectance negative dispersion coating with group velocity dispersion of - 1000 f s², to give a transmissivity of 1% to light of 1045 ± 10nm.

In the solid-state laser device 10 configured as described above, the solid-state laser medium 18 is excited by excitation light emitted from the semiconductor laser 20, and light pulses circulate within the resonator and are emitted from the output mirror 14 as ultra-short pulse light.

The output mirror 14 is bonded to a mirror holder 24, and a knife edge holder 28 (serving as a moving section) is provided above the mirror holder 24. A knife edge 26 is bonded to the knife edge holder 28. Fig. 1C is a diagram showing the mirror holder 24 as viewed from the arrow B direction of Fig. 1B. As shown in Fig. 1C, the mirror holder 24 is formed in a square-sided U-shape, with the knife edge holder 28 provided so as to straddle the depression in the mirror holder 24 and be moveable in the arrow A direction of Fig. 1B.

Loss is imparted to a multi-mode laser beam by moving the knife edge holder 28 in the optical axis direction of the resonator, namely in the arrow A direction, enabling transverse mode control to be performed. Namely, light can be blocked by the knife edge 26 along the long axis direction of the oscillating light formed in an elliptical shape within the resonator, raising the quality of the transverse mode of laser beam for emission.

The position of the knife edge 26 is adjusted to a state in which noise, due to pulse light of different frequencies to the frequency of pulse light circulating in the resonator, is suppressed and mode-locking is maintained.

The components explained above are mounted to a copper plate 32 mounted with Peltier elements 30. Temperature regulation is performed to the components included in the semiconductor laser 20 by driving the Peltier elements 30 with a driving section, not shown in the drawings.

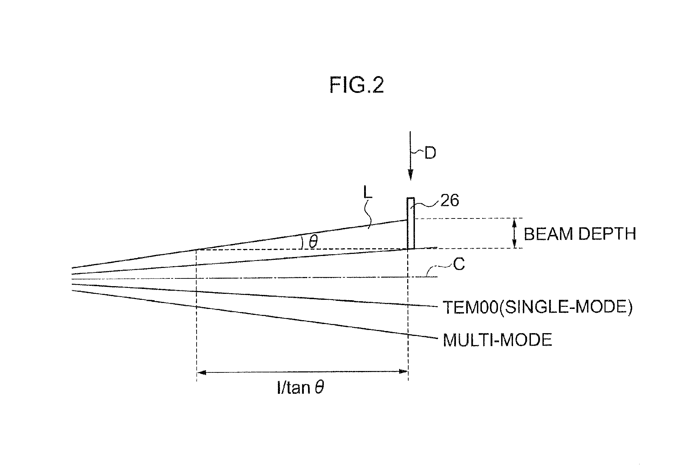

The solid-state laser device 10 according to the present exemplary embodiment thereby is configured such that the knife edge, serving as mode selector, is adjustable in a direction parallel to the resonator optical axis. Hence, in comparison to cases in which the knife edge 26 is inserted along arrow D direction perpendicular to the resonator optical axis direction C, as shown in Fig. 2, into a multi-mode laser beam L with diffusion angle θ, the movement distance is longer when moving the knife edge 26 in a direction parallel to the resonator optical axis C to the beam depth for constraining the beam into a single-mode laser beam, a distance of 1/ tan θ, and so fine regulation in the transverse mode of the laser beam is facilitated by this amount. Accordingly this enables the regulation precision for the transverse mode of the laser beam to be raised.

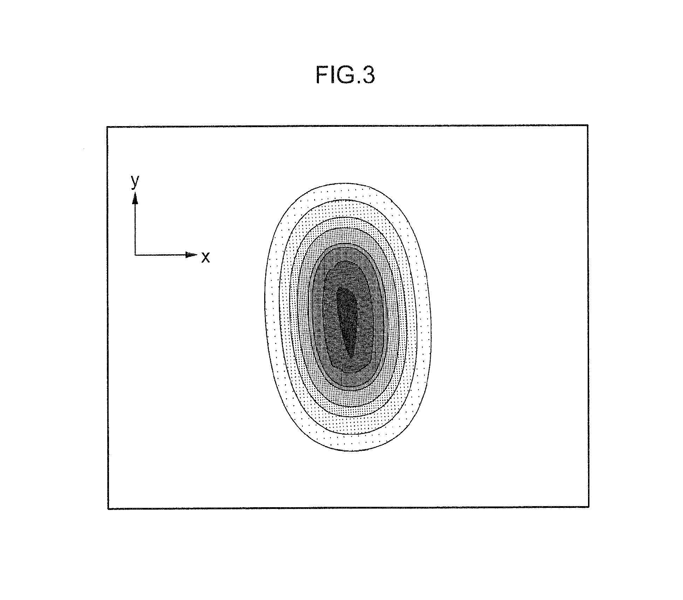

Fig. 3 illustrates a beam profile of a laser beam oscillating from a solid-state laser device not mounted with the knife edge 26. As shown in Fig. 3, beam has an M² = 1.05 in the x axis and whilst a single-mode is adopted, since M² = 1.4 in the y axis direction there is a slight tendency towards multi-mode. This gives an elliptical shaped excitation light spot in the solid-state medium (length in y axis direction: 80 µm, length in x axis direction: 2 µm), and on the y axis side the excitation beam spot close to the spot size (80 µm) of oscillating light might conceivably become multi-mode due to being affected by a thermal lens effect.

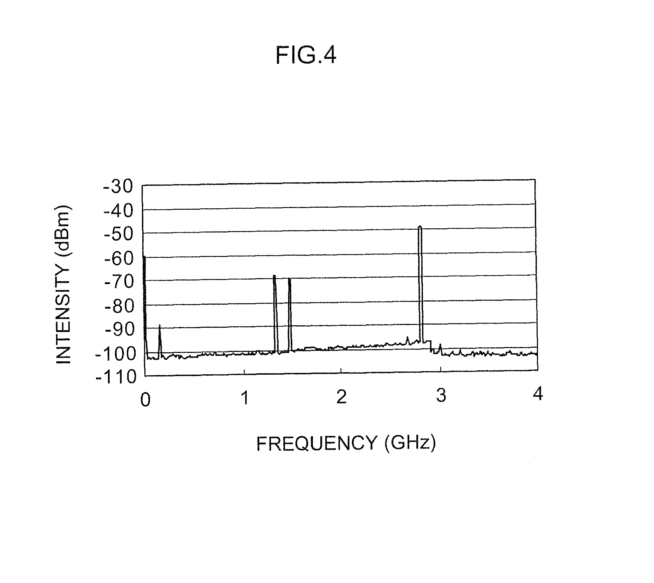

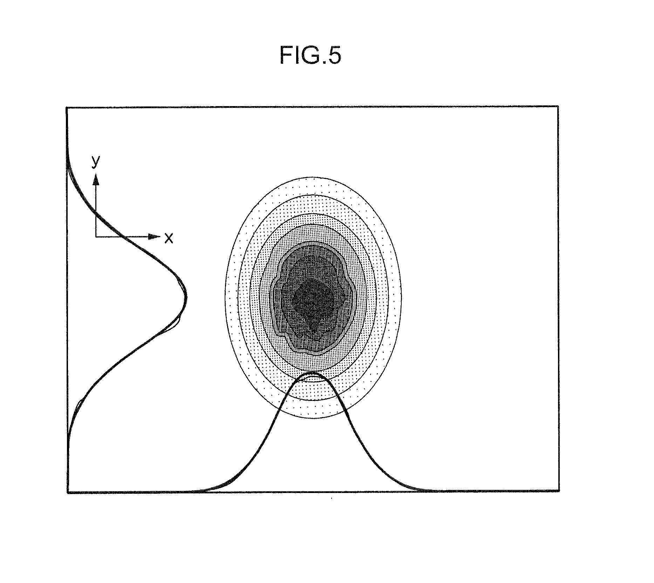

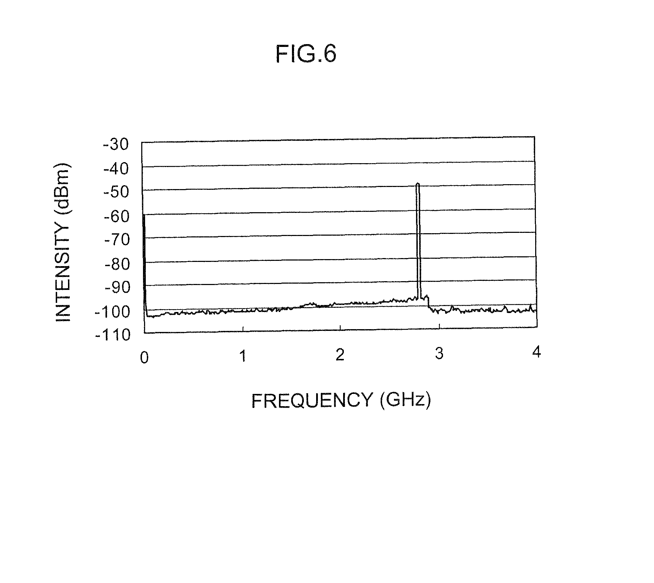

Fig. 4 illustrates RF spectral data from the pulse light emitted from the solid-state laser device detected by a photodetector. Apart from the repeat frequency determined by the resonator length of about 3 GHz, peak intensities are also detected at about half this cycle (referred to below as noise). This can be thought of as an affect from the multi-mode component in the y axis direction. Fig. 5 illustrates a beam profile with suppressed transverse mode in the y axis direction by, from this state, inserting a knife edge along the y axis direction towards the optical axis of the resonator, namely along the length axis direction of the elliptical shape. Fig. 6 illustrates RF spectral data of the pulse light emitted from the solid-state laser device 10 for this case, detected with a photodetector.

As shown in Fig. 5, even in the y axis direction there is a single-mode with M² = 1.07, and as shown in Fig. 6, elimination of noise in the RF spectrum is also achieved. More precisely, for a case in which the knife edge is inserted in the y axis direction towards the resonator optical axis to a position where noise is first eliminated, when the knife edge is inserted further towards the center of the beam from this position, the output falls off at a distance of 20 µm from this position, and mode locking is no longer achieved. However, for a case in which the knife edge holder 28 is moved in the solid-state laser device 10 of Fig. 1, when movement is made from the initial position along the resonator optical axis direction (the z axis direction, towards the right hand side of the page in Fig. 1), similar loss of mode-locking only occurs when a position is reached about 2mm from the position where noise starts to be eliminated. Namely it can be seen that, in contrast to introducing a knife edge in a direction perpendicular to the resonator optical axis, when moving occurs in the resonator optical axis direction there is a much greater degree of movement permissible for the knife edge 26.

While an example is explained in the present exemplary embodiment in which the knife edge 26 is employed as a mode selector, there is however no limitation thereto, and application may also be made to a slit or an aperture.

## Claims

1. A solid-state laser device comprising:
a resonator;
a solid-state laser medium disposed in the resonator;
an excitation section that irradiates an excitation beam into the solid-state laser medium;
a mode selector that controls transverse modes of oscillating light in the resonator; and
a movement section that moves the mode selector along the resonator optical axis direction.

2. The solid-state laser device of claim 1, wherein the resonator comprises a semiconductor saturable absorber mirror, and a negative dispersion mirror that controls group velocity dispersion within the resonator.

3. The solid-state laser device of claim 2, wherein the position of the mode selector is adjusted to a position in which noise with frequencies differing from that corresponding to inverse of light pulse circulating time in the resonator is suppressed and a mode-locked state is maintained.

4. The solid-state laser device of one of claims 1-3, wherein a focused light spot, at focal point in the solid-state laser medium, of the excitation light from the excitation section has an elliptical shape, and the mode selector blocks light in the long axis direction of the elliptical shape of the excitation light.

5. The solid-state laser device of one of claims 1-4, wherein the mode selector is a knife edge, a slit, or an aperture.
